# EUROPEAN PATENT SPECIFICATION

(11) **EP 2 195 236 B1**
(45) Date of publication and mention of the grant of the patent: **14.12.2016**
(21) Application number: 08835209.1
(22) Date of filing: 11.09.2008
(51) Int. Cl.: B64C 23/06

(54) **WINGTIP FEATHERS, INCLUDING PAIRED, FIXED FEATHERS, AND ASSOCIATED SYSTEMS AND METHODS**
FLÜGELSPITZENFEDERN, EINSCHLIESSLICH FESTSTEHENDER FEDERPAARE, SOWIE ZUGEORDNETE SYSTEME UND VERFAHREN
AILETTES DE BOUT D'AILE, Y COMPRIS AILETTES FIXES EN PAIRES, ET SYSTÈMES ET PROCÉDÉS ASSOCIÉS

(30) Priority: 02.10.2007 US 866209
(43) Date of publication of application: 16.06.2010
(73) Proprietor: The Boeing Company, Chicago, IL 60606-1596 (US)
(72) Inventor: DETERT, Bruce, R., Seattle, WA 98117 (US)
(74) Representative: Howson, Richard G.B.
(86) International application number: PCT/US2008/076055
(87) International publication number: WO 2009/045694

(56) References cited:
- EP-A- 0 113 466
- DE-A1- 19 926 832
- US-A- 4 674 709
- US-A1- 2006 027 703
- US-A1- 2009 039 204

## Description

### TECHNICAL FIELD

The present invention is directed generally to wingtip feathers, including paired, fixed feathers, and associated systems and methods for operating such systems.

### BACKGROUND

A significant amount of design and manufacturing effort goes into selecting the shape and configuration of the wings used for commercial transport aircraft. The wings must meet a myriad of design goals, including producing high lift with low drag, and providing sufficient structure to carry a payload, without contributing unnecessarily to aircraft weight. To meet these often contradictory design requirements, designers have developed a number of techniques for distributing the load over the span of the wing in a manner that produces sufficient lift without requiring unnecessary structure. For example, the "ideal" load distribution for a flat wing is generally elliptical. However, conventional aircraft wings are typically not designed for elliptical span loads. Instead, they are designed with compromised "triangular" span loads that reduce structural bending loads at the root of the wing. Such designs trade a slight increase in induced drag for a reduction in airframe weight. The degree of compromise varies considerably from one aircraft to another.

Despite the success of designers in developing highly efficient swept wing configurations for transonic commercial transport aircraft, aircraft manufacturers are under continual pressure to improve the efficiency of such wings so as to reduce aircraft fuel consumption and increase aircraft payload. One approach to improving wing performance has been to add wingtip devices. For example, several existing commercial transport aircraft include winglets extending vertically or generally vertically upwardly and/or downwardly from the tips of the wings. Another approach to enhancing lift at the wingtips is to include wingtip feathers. These feathers are typically movable in some fashion relative to the tip of the wing, and typically include a multitude of spaced-apart feather elements. While such designs have proved suitable in some installations, there is a continued need to develop low-cost, low weight, high-efficiency designs that are suitable for commercial transport aircraft.

US 2006/0027703 discloses a system including a sail having an aerodynamic shape positioned proximate to a tip of a rotor blade. An actuator may be configured to rotate the sail relative to the blade tip. A control system receives information from a rotorcraft system and commands the actuator to rotate the sail to a predetermined favourable rotor blade operating condition.

### SUMMARY

The present invention is set out in the independent claims with some optional faturesset out in the claims decedent thereto.

### BRIEF DESCRIPTION OF THE DRAWINGS

Figure 1 is a partially schematic, rear isometric view of a system that includes an aircraft having wing tip feathers configured in accordance with an embodiment of the disclosure.
Figure 2 is a partially schematic, front elevation view of the embodiment of the aircraft shown in Figure 1.
Figure 3 is a rear elevation view of the tip region of an aircraft wing configured in accordance with an embodiment of the disclosure.
Figure 4 is a top plan view of the outboard portion of the wing shown in Figure 3.
Figure 5 is a flow diagram illustrating a process for designing a wing having wing tip feathers to aide understanding of the present invention..

### DETAILED DESCRIPTION

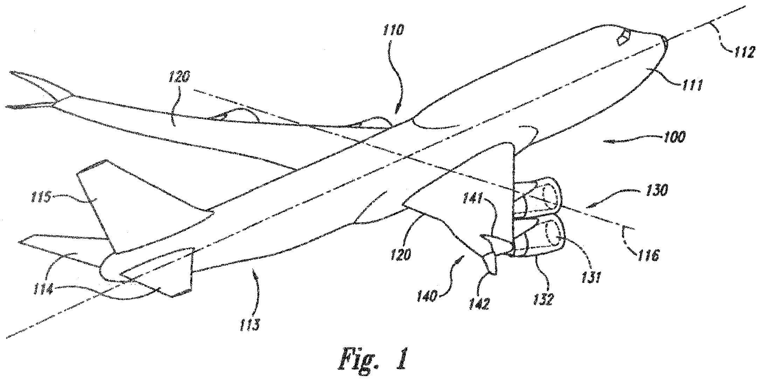

The following description is directed generally to a method of operating an aircraft.. Several of the details describing structures and/or processes that are well-known and often associated with aspects of the systems and methods are not set forth in the following description for purposes of brevity. Moreover, although the following disclosure sets forth several representative embodiments, several other embodiments can have configurations and/or comments different than those described in this disclosure. For example, other embodiments may have additional elements, and/or may delete several of the elements described below with reference to Figures 1-5.

Figure 1 is a partially schematic, rear isometric illustration of an overall system 100 that includes an aircraft 110 configured in accordance with a particular embodiment. The aircraft 110 can include a fuselage 111 elongated along a body axis 112, and wings 120 carried by the fuselage. The wings 120 and the fuselage 111 can roll about the body axis 112 and pitch about a pitch axis 116. The aircraft 110 can further include an empennage 113 carrying horizontal stabilizers 114 and a vertical stabilizer 115 for stability and control in the pitch and yaw directions. A propulsion system 130 provides propulsive force for the aircraft 110 via turbofan engines 131 carried by nacelles 132. The nacelles 132 can be carried by the wings 120 as shown in Figure 1, and/or other portions of the aircraft 110, including the fuselage 111. While

a four-engine jet aircraft is shown in Figure 1 for purposes of illustration, aspects of the present disclosure can be applied to aircraft having other configurations, including twin engine configurations, non-turbofan engines, and/or other wing shapes.

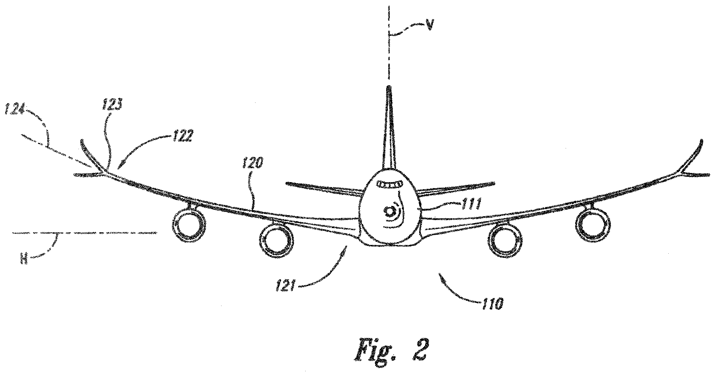

Each of the wings 120 can include a feather system 140. The feather system 140 can in turn include a first, e.g., forward feather 141 and a second, e.g., aft feather 142, both of which can be fixed relative to the wing 120. The fixed positions of the first and second feathers 141, 142, and the presence of only two feathers at each wing 120 can simplify the design, installation and operation of the feather system 140. Further aspects of the feather system 140 that improve overall aircraft performance are described further below with reference to Figures 2-4.

Figure 2 is a front elevation view of the aircraft 110 shown in Figure 1, illustrating the location of each of the wings 120 relative to the horizontal axis H and vertical axis V. Each wing 120 includes an inboard portion 121 at which the wing 120 is connected to the fuselage 111, and an outboard portion 122 positioned outwardly from the fuselage 111 in a spanwise direction. The outboard portion 122 includes a tip 123 which may be canted upwardly from the horizontal axis H in a wingtip plane 124. The first and second feathers 141, 142, which are generally carried at the tip 123, can have particular positions and orientations relative to the horizontal axis H and/or the wingtip plane 124, with these features expected to provide enhanced performance benefits for the aircraft 110.

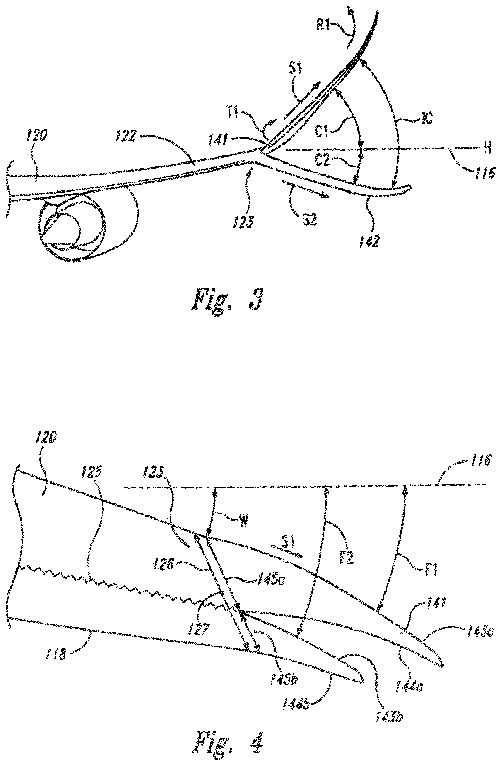

Figure 3 is a rear elevation view of the outboard portion 122 of the right wing 120 shown in Figures 1 and 2. As shown in Figure 3, the first feather 141 is canted upwardly relative to the horizontal axis H by a first cant angle C1, and the second feather 142 is canted downwardly relative to the horizontal axis H by a second cant angle C2. Each of the cant angles C1, C2 can have a value of up to about 60º, depending upon the particular embodiments. In an embodiment shown in Figure 3, the first cant angle C1 has a value of about 45º (measured to the midpoint of the leading edge of the first feather 141), and the second cant angle C2 has a value of about 20º (measured to the midpoint of the leading edge of the second feather 142). The included cant angle IC between the first feather 141 and the second feather 142 can have a value of from about 30º to about 120º. In a particular embodiment shown in Figure 3, the included cant angle IC has a value of about 65º. By keeping the included cant angle greater than 30º, the likelihood for interference between the two feathers 141, 142 can be reduced, and the likelihood for channel or corner flow to develop at or near the junction between the two feathers 141, 142 can also be reduced. By keeping the feathers 141, 142 canted outwardly rather than inwardly relative to the wing 120, the likelihood for channel flow and/or other flows interfering with the wing 120 can also be reduced.

In a particular embodiment, both the first and second tip feathers 141, 142 can be flat and can accordingly define a plane having a fixed angular value relative to the horizontal H. In other embodiments, the tip feathers 141, 142 can have other shapes that are expected to improve the aerodynamic performance of these surfaces. For example, the first feather 141 can be twisted in a spanwise direction S1, as indicated by arrow T1. In addition to or in lieu of twisting the first feather 141, the first feather 141 can be rolled toward its outboard tip, as indicated by arrow R1. The second feather 142 can also be twisted in a manner that changes along its span, as indicated by arrow S2, and/or can also be rolled toward its outboard tip. It is expected that these arrangements will improve the aerodynamic performance of both the first and second tip feathers 141, 142. For example, the twist provided to both the tip feathers 141, 142 can allow the feathers to operate a higher angles of attack without stalling, as compared with feathers that are untwisted.

Figure 4 is a top plan view of the right wing 120 described above with reference to Figure 3. As shown in Figure 4, the tip 123 of the wing 120 has a wing sweep angle W relative to the wing pitch axis 116. The first feather 141 can have a first feather leading edge 143a that is swept by at least the same amount as the wing sweep angle W. For example, the first feather leading edge 143a can have a first feather sweep angle F1 that gradually increases beyond the wing sweep angle W in a spanwise direction S1, when viewed directly from above. The second feather 142 can have a second feather leading edge 143b that is swept by an angle F2 that is also equal to or greater than the wing sweep angle W. It is expected that the increased leading edge sweep angles of the first and second feathers 141, 142, and more particularly the first feather 141, can improve the aerodynamic performance of the feather system 140. For example, the increased sweep angles can reduce pressure peaks at the feather reading edges, which can allow higher angles of attack with a reduced likelihood for flow reparation and stall, e.g., at low speed conditions. In addition, the leading edges of the feathers 141, 142 may be relatively blunt, and the increased aft sweep can lower the shock strength at the feathers (e.g., at high speed conditions).

Each of the first and second feathers 141, 142 can have a chord length that is selected to improve aerodynamic performance, not only of the feathers but also of the wing 120 from which the feathers depend. For example, the wingtip 123 can have a wingtip chord length 126, and the first feather 141 can have a first feather chord length 145a that is at least 50% of the wingtip chord length 126. Accordingly, the juncture between the first feather trailing edge 144a and the wing tip 123 can be at or aft of a midchord point 127 of the wingtip 123. It is expected that this arrangement will control the location of a shock 125 (shown schematically) that forms on the upper surface of the wing 120 at transonic Mach numbers. In particular, it is expected that by placing the first feather trailing edge 144a aft of the midchord point 127, the shock 125 will tend to "follow" the first feather trailing edge 144a over at least a spanwise portion of the wing 120. Accordingly, it is expected that the shock 125 will be aft of a location it would otherwise be were the first feather 141 to have a chord length 145a less than 50% of the wingtip chord length 126. An expected advantage of this arrangement is that it can keep the shock 125 at an aft location over the outboard portion 122 of the wing 120. Because the pressure of air passing through the shock 125 increases, moving the position at which this increase occurs in an aft direction reduces the amount of wing area subjected to the elevated pressure and therefore can reduce the expected impact on wing lift created by the presence of the shock 125.

In a particular embodiment, the second feather 142 can have a second feather chord length 145b that complements the first feather chord length 145a, e.g., the first and second feather chord lengths 145a, 145b can add up to the wingtip chord length 126. As a result, the second feather trailing edge 144b can be aligned with the wing trailing edge 128. In other embodiments, the trailing edge of the second feather 142 need not be coincident with the trailing edge 128 of the wing 120. However, it is expected that in at least some embodiments, coincident trailing edges will reduce the likelihood for the formation of vortices or other flow disturbances at the trailing edge region.

One feature of at least some of the foregoing embodiments described above with reference to Figures 1-4 is that the feather system may include only two feathers attached to each of the wings 120. An expected advantage of this arrangement is that the feathers can be easier to install, and the likelihood for interference between the feathers can be reduced. A further advantage of this arrangement is that it more easily allows for a leading feather (e.g., first feather 141) to have a chord length that is at least 50% of the wing chord length at the tip. As discussed above, an unexpected advantage of this arrangement is that it can keep the shock of the wing upper surface in an aft position so as to reduce the impact of the pressure increases through the shock on the overall lift of the wing.

In another aspect not part of the present invention both the first and second feathers 141, 142 are fixed relative to the wing 120, and neither the first feather 141 nor the second feather 142 includes movable high lift devices (e.g., trailing edge flaps, leading edge slats, movable sub-winglets, or other such features). An unexpected advantage of this arrangement is that it can simplify both the installation and maintenance of the feather system 140. Another expected advantage is that the feathers can have a particular orientation relative to the wing 120, and that orientation can remain fixed over the entire operating envelope of the aircraft, thereby reducing the likelihood for the feathers to be placed in a less than optimum position.

Methods in accordance with particular aspects of the disclosure include designing the location and position of the wing 120 and the first and second feathers 141, 42 in conjunction with each other and possibly in an iterative fashion. For example, with a given wing geometry, the size, shape and location of the first and second feathers can be selected in an iterative manner to provide the desired shock location. In another embodiment, the first and second feathers can have a fixed geometry and the outboard portion of the wing can be tailored to produce the desired shock location. In still a further embodiment, the size, shape, location of the first and second feathers 141, 142, as well as portions of the wing 120 (e.g., the outboard portion) can be changed in an iterative manner until the desired position of the upper surface wing shock is achieved.

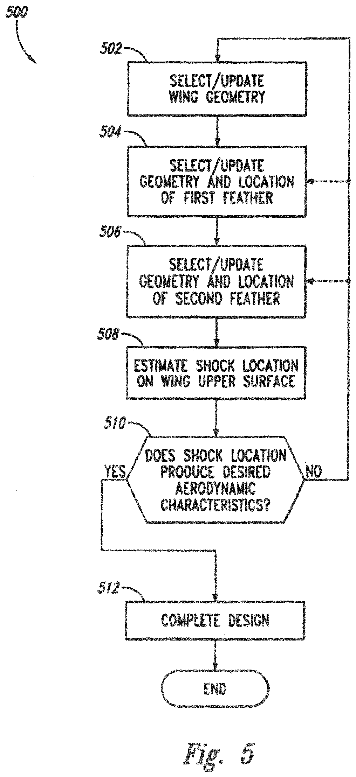

Figure 5 is a flow diagram illustrating a representative methodology for arriving at wing system provided by way of background only. The method 500 can include selecting or updating a wing geometry (process portion 502). For example, process portion 502 can include establishing a baseline wing geometry based on the aircraft mission requirements. In process portion 504, the geometry and location of a first wing tip feather are selected or updated, For example, process portion 504 can include establishing a baseline first feather geometry and location. In process portion 506, the location and geometry of the second wing tip feather are selected or updated.

After process portions 502-506 have been completed, the wing with the first and 5 second feathers can be analyzed. For example, process portion 508 can include estimating the location of a shock on the wing upper surface based upon the foregoing geometry. The aerodynamic characteristics associated with the shock location can be compared with target values in process portion 510. The desired aerodynamic characteristics can include lift/drag characteristics, vortex formation characteristics, 10 and/or other parameters. If the shock location produces the desired aerodynamic characteristics (as determined in process portion 510), then the design of the wing and wing tip feathers can be completed in process portion 512. If the desired aerodynamic characteristics are not met in process portion 510, the process can return to process portion 502, process portion 504 or process portion 506. For example, if the wing geometry is to remain fixed, the geometry and/or location of the first feather and/or the second feather can be updated in process portions 504 and 506 respectively. If the wing geometry is variable, it can be changed in process portion 502. The geometry and/or location of any combination of the wing, the first feather, and the second feather can be varied in an iterative manner until the expected shock location produces the desired aerodynamic characteristics.

The process 500 can be automated.

For example, one or more of the parameters described above (e.g., feather chord length, twist angle, roll-up characteristics, and/or other features) can be parametrically varied using a computer simulation. For example, the chord length of the first feather and the associated location of the first feather trailing edge is expected to have a significant effect on the location of the shock on the upper surface. Accordingly, a computer simulation can include parametrically varying the chord length and trailing edge location and automatically selecting the chord length and trailing edge location that produces the desired shock location. Similar techniques can be used to optimize other characteristics and features of the wing tip feathers and/or the wing (in particular the outboard portion of the wing) to which the feathers are attached.

Suitable analysis tools for conducting the foregoing methods include AGPS, a computer-aided-design geometry generation tool available from The Boeing Company of Chicago, IL. The TRANAIR code, available from Calmer Research Corp. of Cato, NY, can be used to perform flow analysis. The NPSOL code, available from Stanford Business Software, Inc. of Palo Alto, CA and/or TRANAIR can be used to optimize the geometry based on flow results. Other suitable tools can be used in other embodiments.

From the foregoing, it will be appreciated that specific embodiments of the disclosure have been described herein for purposes of illustration, but that various modifications may be made without deviating from these embodiments. For example, the tip feathers can have different shapes and/or orientations than are not specifically shown in the Figures. In an aspect not part of the present invention, the tip feathers may in some cases be movable relative to the wing from which they depend, while still providing the shock-positioning features described above. Certain aspects of the foregoing embodiments described in the context of particular embodiments may be combined or eliminated in other embodiments. In a further aspect not part of the present invention a first feather that is not swept by an angle greater than the wing sweep angle, but that still has a chord length that extends beyond the mid-chord point of the wingtip, so as to provide control over the wing upper surface shock. Further, while advantages associated with certain embodiments have been described in the context of those embodiments, other embodiments may also exhibit such advantages, and not all embodiments need necessarily exhibit such advantages. Accordingly, the disclosure can include other embodiments not shown or described above.

## Claims

1. A method of changing location of a shock wave comprising:
flying a swept wing (120) commercial transport aircraft at a transonic Mach number;
forming a shock wave at an upper surface of the wing; and
controlling a location of the shock wave via a first feather (141) fixed relative to the wing (120) at an outboard tip of the wing, and a second feather (142) fixed at the outboard tip of the wing (120) and positioned aft of the first feather (141),
the method **characterized by** shifting a location of the shock wave on the upper surface from a first position to a second position aft of the first position by moving the trailing edge location of the first feather (141) in an aft direction.

2. The method of claim 1 wherein the wing (120) has a wing tip (143) with a wing tip chord, and wherein controlling a location of a shock includes controlling a location of a shock with the trailing edge of the first feather (141), the trailing edge having a fixed location at or aft of a midpoint of the wing tip chord.

3. The method of any of Claims 1 or 2 wherein controlling a location of a shock includes controlling the location of the shock with a first feather (141) that is twisted and rolled upwardly in a spanwise outward direction.

4. The method of any of Claims 1-3
wherein the first feather (141) has a first chord length that is at least 50% of a wing chord length, a first leading edge that is swept aft by an amount greater than the sweep of the wing leading edge, and an upward cant angle of about 45° relative to horizontal; and
wherein the second feather (142) has a second leading edge that is swept aft by an amount greater than the sweep of the first leading edge, and an included cant angle between the first and second feathers of at least 65°.

5. The method of any of Claims 1-4 wherein the first feather (141) is canted upwardly relative to horizontal, and the second feather (142) is canted downwardly relative to horizontal.

6. The method of any of Claims 1-5 wherein the second feather (142) has a leading edge that is swept aft by a sweep angle that is equal to or greater than the first sweep angle.

## Patentansprüche

1. Verfahren zum Verändern der Position einer Stoßwelle, das beinhaltet:
Fliegen eines Verkehrsflugzeugs mit gepfeilter Tragfläche (120) mit transsonischer Mach-Zahl;
Bilden einer Stoßwelle an einer oberen Fläche der Tragfläche; und
Steuern der Position der Stoßwelle über eine erste Feder (141), die bezüglich der Tragfläche (120) an einer Außenspitze der Tragfläche befestigt ist, und eine zweite Feder (142), die an der Außenspitze der Tragfläche (120) befestigt und hinter der ersten Feder (141) angeordnet ist,
wobei das Verfahren **gekennzeichnet ist durch** Verschieben der Position der Stoßwelle auf der oberen Fläche von einer ersten Position zu einer zweiten Position hinter der ersten Position **durch** Bewegen der Position der Hinterkante der ersten Feder (141) in Rückwärtsrichtung.

2. Verfahren nach Anspruch 1, wobei die Tragfläche (120) eine Tragflächenspitze (143) mit einer Tragflächenspitzensehne hat, und wobei das Steuern der Position eines Stoßes das Steuern der Position eines Stoßes mit der Hinterkante der ersten Feder (141) beinhaltet, wobei die Hinterkante eine feste Position an oder hinter einem Mittelpunkt der Tragflächenspitzensehne hat.

3. Verfahren nach einem der Ansprüche 1 oder 2, wobei das Steuern der Position eines Stoßes das Steuern der Position des Stoßes mit einer ersten Feder (141) beinhaltet, die in Spannweitenrichtung nach außen gedreht und nach oben gerollt ist.

4. Verfahren nach einem der Ansprüche 1 bis 3, wobei die erste Feder (141) eine erste Sehnenlänge hat, die wenigstens 50% einer Tragflächensehnenlänge beträgt, eine erste Vorderkante, die um einen Betrag nach hinten gepfeilt ist, der größer ist, als die Pfeilung der Tragflächen-Vorderkante, und einen Aufwärtsneigungswinkel von ca. 45° bezüglich der Horizontalen; und
wobei die zweite Feder (142) eine zweite Vorderkante hat, die um einen Betrag nach hinten gepfeilt ist, der größer ist, als die Pfeilung der ersten Vorderkante, und einen zwischen der ersten und zweiten Feder eingeschlossenen Neigungswinkel von wenigstens 65°.

5. Verfahren nach einem der Ansprüche 1 bis 4, wobei die erste Feder (141) bezüglich der Horizontalen nach oben geneigt ist und die zweite Feder (142) bezüglich der Horizontalen nach unten geneigt ist.

6. Verfahren nach einem der Ansprüche 1 bis 5, wobei die zweite Feder (142) eine Vorderkante hat, die um einen Pfeilwinkel nach hinten gepfeilt ist, der gleich oder größer als der erste Pfeilwinkel ist.

## Revendications

1. Procédé destiné à changer l'emplacement d'une onde de choc, consistant à:
faire voler un aéronef de transport commercial avec des ailes en flèche (120) au niveau d'un nombre de mach transsonique ;
former une onde de choc au niveau d'une surface supérieure de l'aide ; et
commander un emplacement de l'onde de choc par une première ailette (141) fixe par rapport à l'aile (120) au niveau d'un bout extérieur de l'aile, et une seconde ailette (142) fixe au niveau du bout extérieur de l'aile (120) et positionnée vers l'arrière de la première ailette (141),
le procédé étant **caractérisé par** le déplacement d'un emplacement de l'onde de choc sur la surface supérieure depuis une première position vers une seconde position vers l'arrière de la première position en déplaçant l'emplacement du bord de fuite de la première ailette (141) dans une direction vers l'arrière.

2. Procédé selon la revendication 1, dans lequel l'aile (120) a un bout d'aile (143) avec une corde de bout d'aile, et dans lequel la commande d'un emplacement d'un choc comporte la commande d'un emplacement avec le bord de fuite de la première ailette (141), le bord de fuite ayant un emplacement fixe au niveau ou vers l'arrière d'un point central de la corde de bout d'aile.

3. Procédé selon une quelconque des revendications 1 ou 2, dans lequel la commande d'un emplacement d'un choc comporte la commande de l'emplacement du choc avec une première ailette (141) qui est tordue et enroulée vers le haut dans une direction dans le sens de l'envergure vers l'extérieur.

4. Procédé selon une quelconque des revendications 1 à 3, dans lequel la première ailette (141) a une première longueur de corde qui représente au moins 50 % d'une longueur de corde d'aile, un premier bord d'attaque qui est fléché vers l'arrière d'une quantité supérieure à la flèche du bord d'attaque de l'aile, et un angle incliné vers le haut d'environ 45° par rapport à l'horizontale ; et
dans lequel la seconde ailette (142) a un second bord d'attaque qui est fléché vers l'arrière d'une quantité supérieure à la flèche du premier bord d'attaque, et un angle incliné inclus entre la première et la seconde ailette d'au moins 65°.

5. Procédé selon une quelconque des revendications 1 à 4, dans lequel la première ailette (141) est inclinée vers le haut par rapport à l'horizontale, et la seconde ailette (142) est inclinée vers le bas par rapport à l'horizontale.

6. Procédé selon une quelconque des revendications 1 à 5, dans lequel la seconde ailette (142) a un bord d'attaque qui est fléché vers l'arrière d'un angle de flèche qui est supérieur ou égal au premier angle de flèche.
